# EUROPEAN PATENT APPLICATION

(11) **EP 3 792 420 A1**
(43) Date of publication of application: **17.03.2021**
(21) Application number: 19804606.2
(22) Date of filing: 30.07.2019
(51) Int. Cl.: E04B 1/94, F16L 5/04, F16L 5/10

(54) **FIREPROOF STRUCTURE FOR THROUGH-PENETRATION FIRESTOPPING OF BUILDING**

(71) Applicant: Kim, Jung Un, Bomseo-eup, Ulju-gun, Ulsan Bomseo-eup 44920 (KR)
(72) Inventor: The designation of the inventor has not yet been filed
(74) Representative: Beetz & Partner mbB
(86) International application number: PCT/KR2019/009450
(87) International publication number: WO 2021/020614

(57) **Abstract**

The present invention relates to a fireproof structure installed to prevent a fire from diffusing in a penetrating part in which a penetration member such as a pipe pass through a partition wall of a building. The present invention exerts the following effects. There is an advantage that can effectively block the penetrating part of the partition wall by expanding the fireproof filler inside the penetration member tightly at a suitable temperature without requiring to apply a thermal insulating material to the partition wall of the existing fire exposure zone separately, and thus the costs of material and labor can be saved. In addition, the existing method requires construction of a fireproof filling structure directly on site, which has several disadvantages in terms of many constraints on a working condition and severe variation in quality depending on the skill of the constructor, whereas according to the present invention, all the fireproofing devices can be manufactured in a specialized factory to improve the uniformity of quality and solve the problem of delay of construction involved depending on the site condition.

## Description

### [Technical Field]

The present invention relates to a fireproof structure installed to prevent a fire from diffusing in a penetrating part in which a penetration member such as a pipe pass through a partition wall of a building.

### [Background]

In order to minimize a damage by preventing smoke or flame from diffusing rapidly into an adjacent room in the event of a fire in the building, when a pipe or a wire penetrates the fire compartment of the floor or wall of the building, a fireproof filling structure is applied around such a penetrating part.

In other words, the construction to seal the penetrating part in accordance with the performance of the fireproof structure is carried out, which is called a fireproof filling construction.

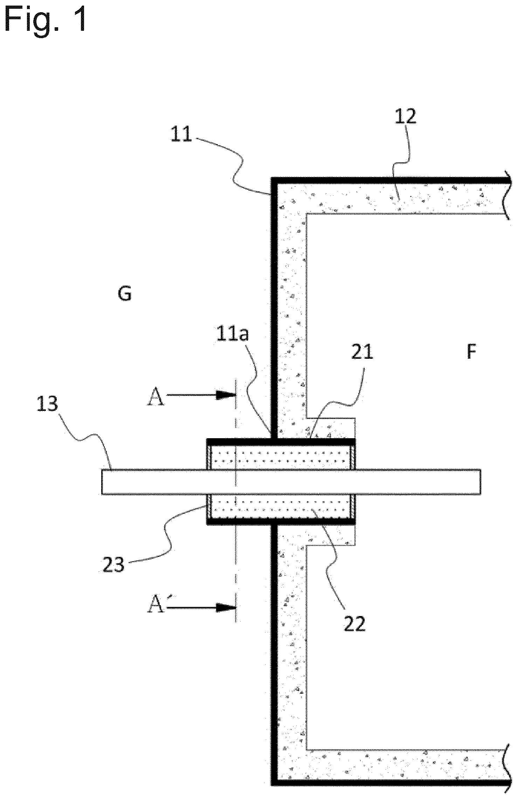

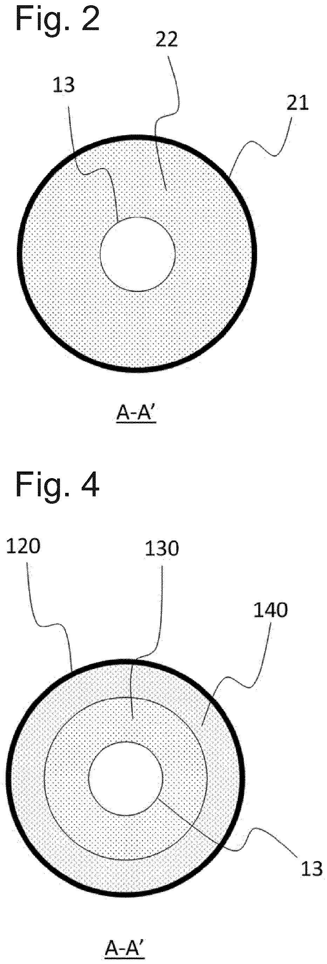

FIG. 1 shows a configuration that applies a sleeve to the portion in which a pipe, a duct, a tube, a rod, and a wire (collectively referred to as the 'penetration member') including a material having a thermally fragile property such as general plastic pipe and wire or consisting of such material entirely penetrates a partition wall (iron plate etc.), and FIG. 2 is a cross-sectional view taken along the line A-A' of FIG. 1. This conventional method is configured such that a penetrating part 11a in a partition wall or a steel deck (collectively referred to as the 'partition wall') which fails to have a sufficient thermal insulation effect by itself, such as steel, is provided with a sleeve 21 having a fireproof filler 22 filled therein, wherein a penetration member 13 passes through the center of the penetrating part 11a and a sealing portion 23 covers both ends of the penetrating part 11a to seal the inside of the sleeve 21.

Since this conventional method must block a thermal conduction through a partition wall 11 so that the fireproof filler 22 and the penetration member 13 are not exposed to excessive high heat, the construction of covering the partition wall 11 of a fire generating zone F with a thermal insulating material 12 must essentially be carried out. Therefore, there is a problem that the cost of material and labor due to the additional construction of the thermal insulating material 12 increases.

Further, in case both spaces divided by the partition wall 11 correspond to a fire compartment that may cause a fire, it may be necessary to construct the thermal insulating material 12 on both sides of the partition wall 11, whereby the disadvantages in terms of economics become even more apparent.

In addition, the existing method requires construction of a fireproof filling structure directly on site, which has several disadvantages in terms of many constraints on a working condition and severe variation in quality depending on the skill of the constructor.

### [Detailed Description of the Invention]

### [Technical Problem]

The problem to be solved in the present invention is as follows.

In other words, the present invention is intended to propose a configuration that can effectively block a penetrating part of a partition wall by expanding a fireproof filler into the interior of a penetration member tightly at a suitable temperature without applying a thermal insulating material to the partition wall of the existing fire exposure zone separately.

### [Means for Solving the Problem]

In order to solve the above problem, the present invention is to provide a fireproof structure for preventing fire diffusion in a penetrating part of a building, characterized by comprising:
a thermal insulating material 140 centered on a penetrating part 11a of a partition wall 11 through which a penetration member 13 passes and formed over a predetermined length section perpendicular to the partition wall 11 to surround the penetration member 13; an outer sleeve 120 having the thermal insulating material 140 surrounded on an inner side surface thereof and the partition wall 11 coupled to an outer side surface thereof; and a fireproof filler 130 formed between the thermal insulating material 140 and the penetration member 13 at some section of one end, some section of both ends or entire section of the thermal insulating material 140 and expanded by heat of a certain temperature or more,
wherein the outer sleeve 120 includes an outer sealing cover 121 that seals an inner space of the outer sleeve 120 at both ends of the outer sleeve 120 and has a penetrating hole 121a through which the penetration member 13 passes in the center of the outer sleeve 120, and the outer sealing cover 121 includes a temporary cover 121d of a material in which the periphery of the penetrating hole 121a and the region adjacent to the fireproof filler 130 in the outer sealing cover 121 are lost by heat of the predetermined temperature or more, and
wherein an expansion induction space 121b is formed as an empty space between the temporary cover 121d and the fireproof filler 130.

### [Effects of the Invention]

The present invention exerts the following effects.

There is an advantage that can effectively block a penetrating part of a partition wall by expanding a fireproof filler into the interior of a penetration member tightly at a suitable temperature without requiring to apply a thermal insulating material to the partition wall of the existing fire exposure zone separately, and thus the costs of material and labor can be saved.

In addition, the existing method requires construction of a fireproof filling structure directly on site, which has several disadvantages in terms of many constraints on a working condition and severe variation in quality depending on the skill of the constructor, whereas according to the present invention, all the fireproofing devices can be manufactured in a specialized factory to improve the uniformity of quality and solve the problem of delay of construction involved depending on the site condition.

### [Brief Description of the Drawings]

FIG. 1 is a side cross-sectional view showing a configuration of a sleeve installed in a penetrating part when a general penetration member passes through a partition wall.
FIG. 2 is a cross-sectional view taken along the line A-A' of FIG. 1.
FIG. 3 is a side cross-sectional view showing a configuration according to a first embodiment of the present invention.
FIG. 4 is a cross-sectional view taken along the line A-A' of FIG. 3.
FIG. 5 is a perspective view of a fireproof structure in which an inner sleeve is formed.
FIGS. 6 to 9 are side cross-sectional views showing a configuration of a fireproof structure according to another embodiment of the present invention.
FIGS. 10 and 11 are views illustrating a process of expanding a fireproof filler in the event of a fire.

### [Best Mode for Carrying Out the Invention]

The best mode for carrying out the invention is as follows.

A fireproof structure for preventing fire diffusion in a penetrating part of a building according to the present invention is characterized by comprising: a thermal insulating material 140 centered on a penetrating part 11a of a partition wall 11 through which a penetration member 13 passes and formed over a predetermined length section perpendicular to the partition wall 11 to surround the penetration member 13; an outer sleeve 120 having the thermal insulating material 140 surrounded on an inner side surface thereof and the partition wall 11 coupled to an outer side surface thereof; and a fireproof filler 130 formed between the thermal insulating material 140 and the penetration member 13 at some section of one end, some section of both ends or entire section of the thermal insulating material 140 and expanded by heat of a certain temperature or more,
wherein the outer sleeve 120 includes an outer sealing cover 121 that seals an inner space of the outer sleeve 120 at both ends of the outer sleeve 120 and has a penetrating hole 121a through which the penetration member 13 passes in the center of the outer sleeve 120, and the outer sealing cover 121 includes a temporary cover 121d of a material in which the periphery of the penetrating hole 121a and the region adjacent to the fireproof filler 130 in the outer sealing cover 121 are lost by heat of the certain temperature or more, and
wherein an expansion induction space 121b is formed as an empty space between the temporary cover 121d and the fireproof filler 130.

### [Embodiment for the Invention]

Hereinafter, preferred embodiments of the present invention will be described with reference to the accompanying drawings. However, the scope of the present invention should be grasped by the claims. In addition, description of the well-known technology which obscures the summary of this invention will be omitted.

The term 'penetration member' used in the present invention collectively means that a pipe, a duct, a tube, a rod, and a wire including a material having a thermally fragile property such as general plastic pipe and wire or entirely consisting of such material penetrates a partition wall of a building. The term "partition wall" refers to a wall body such as a partition wall or a deck which fails to have a sufficient thermal insulation effect by itself, including steel, that divides a space.

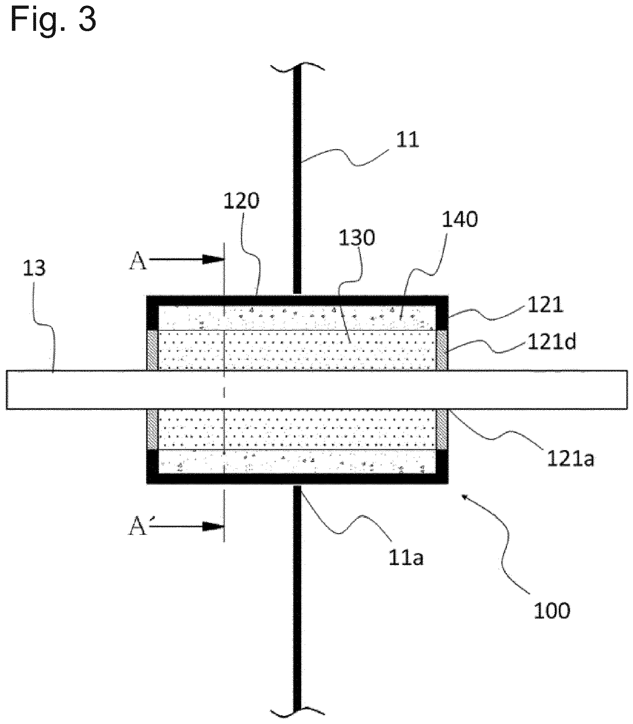

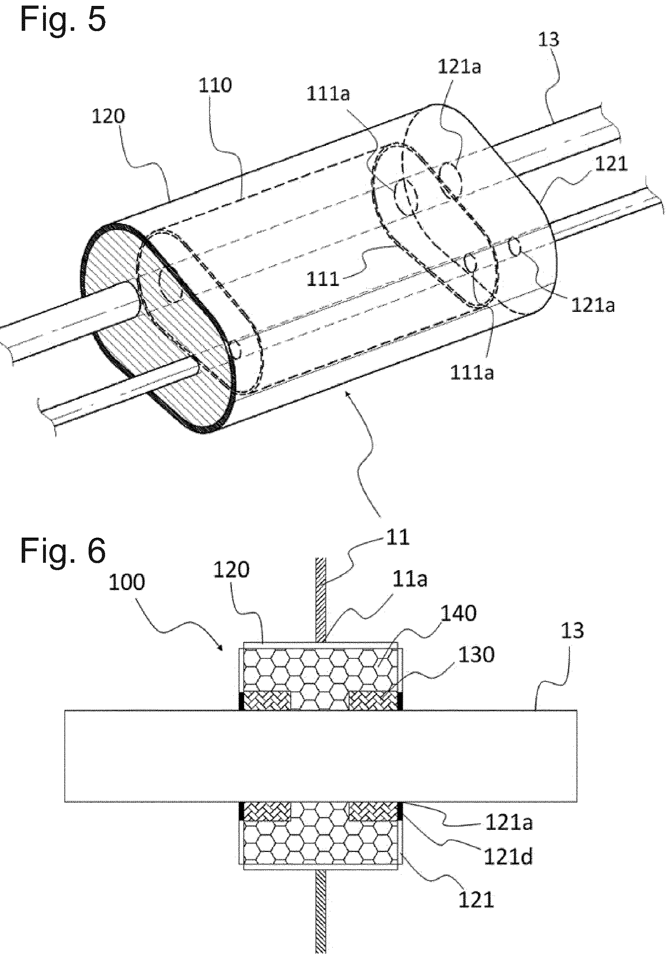

The fireproof structure 100 for preventing fire diffusion in a penetrating part of a building according to the present invention comprises an outer sleeve 120, a fireproof filler 130, and a thermal insulating material 140 as a basic configuration, as shown in FIGS. 3 and 4, and may further comprise an inner sleeve 110 as shown in FIG. 5.

The thermal insulating material 140 is formed over a predetermined length section perpendicular to a partition wall 11 in the center of a penetrating part 11a of the partition wall 11 through which a penetration member 13 passes to surround a penetration member 13. That is, the thermal insulating material 140 surrounds a certain section of the penetration member 13 which passes through the penetrating part 11a.

In this case, the fireproof filler 130 is formed over some or all sections between the thermal insulating material 140 and the fireproof filler 130 to serve to prevent the fireproof filler 130 from being directly exposed to high heat. This eliminates the need for a separate thermal insulating material 12 as in the conventional method of FIGS. 1 and 2.

Examples of the thermal insulating material 140 include a cement, a foam cement, a gypsum, a mineral wool, a CERAKWOOL, and the like, but are not limited thereto. However, in the structure in which the inner sleeve 110 is omitted, it is preferable to select a solid thermal insulating material to maintain the shape of the thermal insulating material 140. In particular, in case the solid thermal insulating material is used, the fireproof filler 130 has an effect of maintaining the shape such that the fireproof filler 130 can be filled around the penetration member 13 even when expanded.

The outer sleeve 120 is a housing in which the inner side surface surrounds the thermal insulating material 140 and the outer side surface is coupled to the partition wall 11, and is inserted into the penetrating part (11a) by forming to correspond a cross section of the penetrating part 11a and the outer sleeve 120 in the partition wall 11 to each other.

An outer sealing covers 121 are formed at both ends of the outer sleeve 120 to seal the inner space of the outer sleeve 120, respectively, and a penetrating hole 121a through which the penetration member 13 passes are formed at the center of the outer sealing cover 121.

The outer sleeve 120 and the outer sealing cover 121 serve to protect the thermal insulating material 140 to exert the function thereof even when a fire occurs. For this purpose, they must be made of a material such as steel that is not deformed by heat.

A part of the outer sealing cover 121 may be formed as a temporary cover 121d, and the temporary cover 121d may be made of a material in which the periphery of the penetrating hole 121a and the region adjacent to the fireproof filler 130 in the outer sealing cover 121 are lost by heat of a predetermined temperature or more. If the temporary cover 121d is formed, it is lost by heat when a fire occurs, so that the heat can be quickly transferred to the fireproof filler 130. In addition, the temporary cover 121d also serves to prevent heat from being directly transferred to the penetration member 13 through the outer sealing cover 121 made of a steel.

Meanwhile, an expansion induction space 121b may be provided between the temporary cover 121d and the fireproof filler 130 as an empty space. When the fireproof filler 130 is to be expanded by heat transfer to the fireproof filler 130 due to the loss of the temporary cover 121d in the event of a fire, the fireproof filler 130 is first expanded to the expansion induction space 121b, thereby serving to induce the expansion direction of the fireproof filler (130).

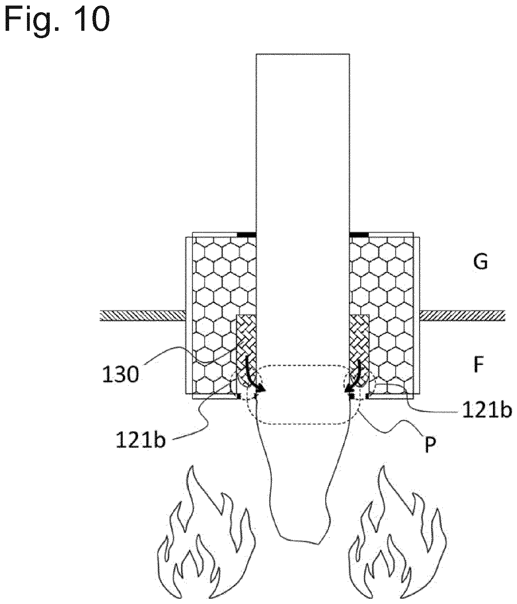

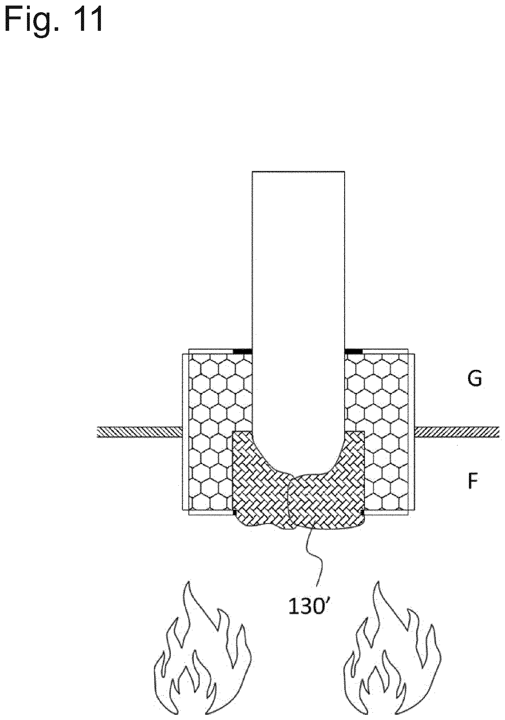

The above is described in more details with reference to FIGS. 10 and 11, as follows. Two spaces divided on the base of the partition wall 11 are referred to as G and F. If a fire occurs in the F space, the penetration member 13 protruding into the F space melts and the P portion in the outskirts of the thermal insulating material 140 is lost due to its weakening. Likewise, the temporary cover 121d is also lost by heat so that the heat of fire is transferred to the fireproof filler 130. At this time, the fireproof filler 130 is expanded into the expansion induction space 121b by heat, as shown in FIG. 10, and the expanded material immediately fills a gap generated in the penetration member 13 of the P portion by heat. Such filling occurs continuously in the vicinity of the penetrating hole 121a along the circumference of the penetration member 13, and as a result, as shown in FIG. 11, the penetrating hole 121a is filled with the expanded fireproof filler 130' to block the path of the heat or flame caused by the fire.

In the case where the expansion induction space 121b is absent, the expanded material of the fireproof filler 130' fails to fill the gaps of the penetration member 13 of the P portion generated by heat and may escape to the outside of the outer sealing cover 121. Accordingly, the expansion induction space 121b can prevent the expanded material of the fireproof filler 130' from escaping to the outside and effectively block the gap generated in the penetration member to improve the reliability of the function.

In addition, a temporary thermal insulating material 121c may be filled in the expansion induction space 121b. The temporary thermal insulating material 121c is the thermal insulating material made of a material that is lost by heat of a predetermined temperature or more. The temporary thermal insulating material 121c plays a role for keeping warm the fireproof filler 130 between the fireproof filler 130 and the temporary cover 121d within the predetermined temperature but is lost by heat so that the expansion induction space 121b can function properly in the event of a fire. The temporary thermal insulating material 121c may include, but is not limited to, crosslinked foamed polyethylene, and be variously selected as long as the material has a thermal insulating (warm) function and a low melting point.

The fireproof filler 130 is formed between the thermal insulating material 140 and the penetration member 13 in some section of one end, some section of both ends or entire section of the thermal insulating material 140, and may be composed of a fireproof sealant as a thermally expandable fireproof material which expands by heat of a predetermined temperature or more. Referring to FIG. 11, if the penetration member 13 is lost in the space F where a fire occurs, the fireproof filler 130 serves to block the penetrating part 11a by expand more than several times at a specific high temperature so as to prevent the fire from diffusing to another space G separated by the partition wall 11 through the penetrating part 11a.

As shown in FIG. 5, an inner sleeve 110 is a housing made to surround the fireproof filler 130 between the thermal insulating material 140 and the fireproof filler 130 to form a double partition wall together with an outer sleeve 120. The cross section has a shape corresponding to the cross section of the inner sleeve 110 and may be configured as a sleeve made of a steel having a three-dimensional shape of a cylindrical type or a long square pillar type.

On the other hand, one penetration member 13 is surrounded with the inner sleeve 110 and the outer sleeve 120 in a cylindrical shape concentrically in most cases but may be configured with more than two pipes or wires.

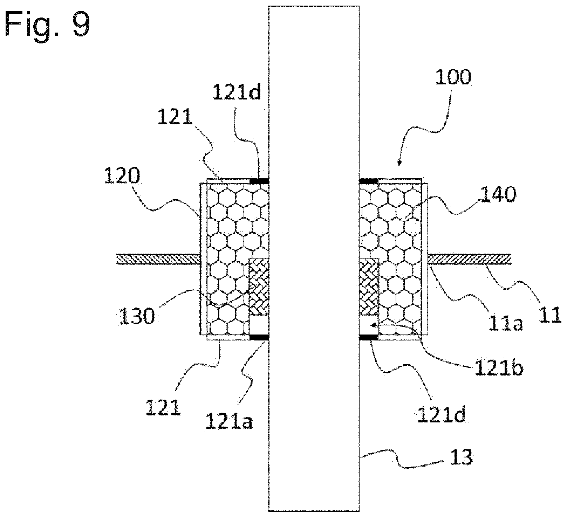

Various embodiments of the present invention are illustrated in FIGS. 6 to 9.

Firstly, the first embodiment is that the fireproof filler 130 is formed to surround the thermal insulating material 140 and the penetration member 13 over the entire section in which the thermal insulating material 140 is formed, as shown in FIG. 3. The second embodiment suggests that the fireproof filler 130 is formed only on a part of both ends of the section in which the thermal insulating material 140 is surrounded as shown in FIG. 6. That is, the thermal insulating material 140 is surrounded up to the surface of the penetration member 13 in the center portion of the outer sleeve 120 where the partition wall 11 is located, and the surface of the penetration member 13 in the portion adjacent to the penetrating hole 121a is surrounded with the fireproof filler 130. Therefore, when a fire occurs in any one space divided by the partition wall 11, only the fireproof filler 130 located in the corresponding space is expanded to block the passage created by the penetration member 13.

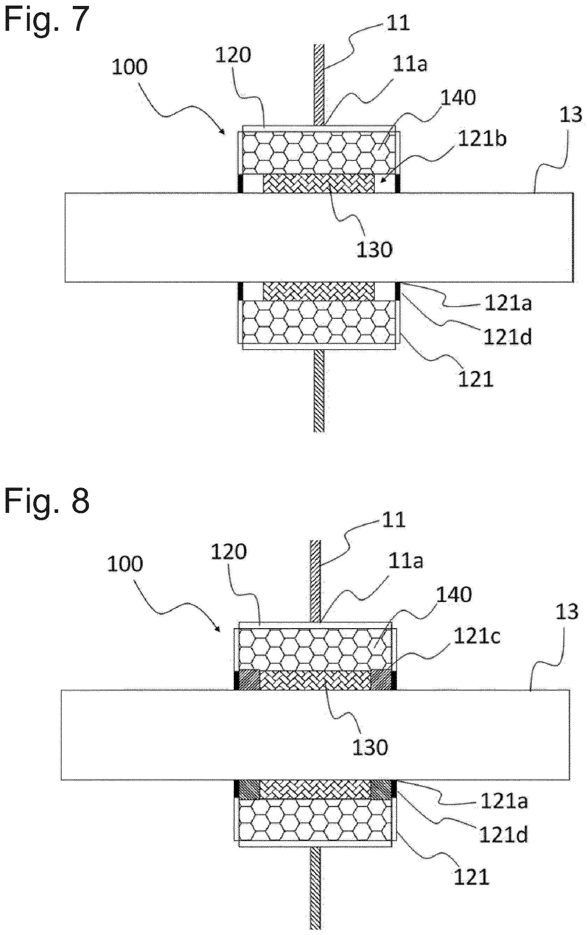

The third embodiment suggests that the expansion induction space 121b is formed as shown in FIG. 7, wherein the center portion of the outer sleeve 120 in which the partition wall 11 is located is surrounded with the thermal insulating material 140 up to the surface of the penetration member 13 and the surface of the penetration member 13 in the portion adjacent to the penetrating hole 121a is surrounded with the fireproof filler 130, as in the second embodiment.

The fourth embodiment suggests that the temporary thermal insulating material 121c is formed in the expansion induction space 121b as shown in FIG. 8.

The fifth embodiment shows that the fireproof structure 100 is installed in a horizontal partition wall dividing the up and down spaces such as the floor, unlike the case in which the fireproof structure 100 is installed in the vertical partition wall as in the previous embodiments. In this case, since the flame caused by a fire is unlikely to spread downward and will mostly spread upward, the fireproof filler 130 is formed only at the lower portion on the basis of the partition wall 11 and the upper portion on the surface of the penetration member 13 is surrounded with all of the thermal insulating material 140. Of course, both the expansion induction space 121b and the temporary thermal insulating material 121c will also be formed only in the lower portion based on the partition wall 11.

However, the outer sealing cover 121 and the temporary cover 121d may also be formed in the upper portion, which is to allow the temporary cover 121d to block heat from being directly transferred to the penetration member 13 through the outer sealing cover 121 as the heat in the lower space rises on the outer sleeve 120.

It will be apparent to a person who has an ordinary knowledge in the technical field to which the present invention belongs that the present invention described above is not limited to the above-described embodiments and the accompanying drawings, and various substitutions, modifications, and changes can be made within the scope which does not depart from the technical spirit of the present invention.

### [Industrial Availability]

The present invention relates to a fireproof structure for preventing a fire from diffusing in a penetrating part in which a penetration member such as a pipe passes through a partition wall of a building. The fireproof structure of the present invention can effectively block a penetrating part of a partition wall by expanding a fireproof filler inside the penetration member at a suitable temperature without applying a thermal insulating material to the partition wall of the existing fire exposure zone separately.

## Claims

1. A fireproof structure for preventing fire diffusion in a penetrating part of a building, **characterized by** comprising:
a thermal insulating material 140 centered on a penetrating part 11a of a partition wall 11 through which a penetration member 13 passes and formed over a predetermined length section perpendicular to the partition wall 11 to surround the penetration member 13;
an outer sleeve 120 having the thermal insulating material 140 surrounded on an inner side surface thereof and the partition wall 11 coupled to an outer side surface thereof; and
a fireproof filler 130 formed between the thermal insulating material 140 and the penetration member 13 at some section of one end, some section of both ends or entire section of the thermal insulating material 140 and expanded by heat of a predetermined temperature or more.

2. The fireproof structure for preventing fire diffusion in the penetrating part of the building according to claim 1,
**characterized in that** the outer sleeve 120 includes an outer sealing cover 121 that seals an inner space of the outer sleeve 120 at both ends of the outer sleeve 120 and has a penetrating hole 121a through which the penetration member 13 passes in the center of the outer sleeve 120, and
the outer sealing cover 121 includes a temporary cover 121d made of a material in which the periphery of the penetrating hole 121a and the region adjacent to the fireproof filler 130 in the outer sealing cover 121 are lost by heat of the predetermined temperature or more.

3. The fireproof structure for preventing fire diffusion in the penetrating part of the building according to claim 2,
**characterized in that** an expansion induction space 121b is formed as an empty space between the temporary cover 121d and the fireproof filler 130.
